# EUROPEAN PATENT SPECIFICATION

(11) **EP 3 369 925 B1**
(45) Date of publication and mention of the grant of the patent: **04.09.2019**
(21) Application number: 17382103.4
(22) Date of filing: 01.03.2017
(51) Int. Cl.: E02B 17/02, F03D 13/20, E02B 17/00

(54) **JOINING SYSTEM BETWEEN WIND TURBINE TOWER MAIN SHAFT AND BUTTRESS ELEMENTS AND WIND TURBINE TOWER**
VORRICHTUNG ZUR VERBINDUNG VON WINDTURBINENTURMHAUPTWELLEN UND VERSTEIFUNGSELEMENTEN UND WINDTURBINENTURM
SYSTÈME D'ASSEMBLAGE ENTRE UN ARBRE PRINCIPAL DE TOUR D'ÉOLIENNE ET DES ÉLÉMENTS DE RENFORT ET TOUR D'ÉOLIENNE

(43) Date of publication of application: 05.09.2018
(73) Proprietor: GRI Renewable Industries, S.L., 28045 Madrid (ES)
(72) Inventor: GALLARDO HERNÁNDEZ, Rodrigo, 28045 MADRID (ES)
(74) Representative: Ungria López, Javier

(56) References cited:
- EP-A1- 2 333 163
- EP-A1- 2 647 764
- US-A1- 2011 142 682
- US-A1- 2015 376 857

## Description

### Object of the invention

The present invention relates to a joining system between wind turbine tower main shaft and buttress elements, said joining system comprises a fastening structure located in the joining ring to receive and fasten the buttress, such that the fastening structure is integrated in the joining ring and extends at least towards the inside thereof, so that no element of the joining ring protrudes. It further comprises at least one joining flange in the main shaft that receives struts that join the buttress to the main shaft from an elbow located in the buttress.

### Technical problem to be solved and background of the invention

Many concepts have been proposed to make the need for high towers viable for the wind power market, high towers being considered as those whose height exceeds 100 meters.

These solutions suggest using concrete to make the projects viable, but many of the solutions proposed are theoretical and are proven unfeasible in the course of implementation.

A number of solutions have been proposed in the offshore maritime wind turbine sector, linked to submerged lattice structures that comprise a central body and several buttresses that run parallel to the central body up to a point where they come into connect with the central body.

The buttress of said lattice structures come into contact with the central body of the tower in a special ring (joining piece) that has elements for receiving the buttress, such that in addition to receiving the buttress, it fastens them to the central body.

The central body of said towers for wind generators is made up of rings that overlap one another to form the tower.

Similarly, the buttress have a circular cross-section and they have a wedge-shaped end in order to come into contact with the central body, which facilitates contact of the buttress with the central body.

Document EP 2 647 764 A1 describes a well-known connecting piece of the type to which the invention relates, wherein the central piece made up of two halves and which has a plurality of internal stiffeners in turn has connecting structures of the arms made up of a structure of welded straight metal sheets and another plurality of pieces that cause the pieces of structure to project from the connecting piece, and which make the manufacture thereof complex.

Document DE 10 2006 056 274 B4, which discloses a tower of a wind turbine comprising a base in the form of a lattice tower with at least three corner posts and an upper portion in the shape of a substantially round cross-section tubular tower, is also well know. Here in the transition region of the upper terminal portion of the lattice tower it is connected by means of a transition body to the upper terminal portion of the tubular tower. The transition body is constructed in the form of a truncated cone, wherein the corner posts extend in the transition region and are partially connected in the transition area between the upper terminal region of the lattice tower and the bottom area of the tubular tower with the truncated cone.

The document EP 2333163 A1 describes an offshore structure comprising a base structure with columns and a transition piece with the tower in order to mount wind turbine. The transition piece is cylindrical and has the outer surface plates there welded in slots of the columns of the base structure.

The document WO 2011/070 325 A2 describes a connector between the mast and the top portion of a grid-like base structure. The connector comprises a cylinder and a spatial box girder. The box girder is situated on the top portion of the foundation structure. The box girder has vertical side walls that are welded to the main struts and the cylinder.

Document DE 20 2009 018 011 U1 discloses a wind turbine with three tubular foundation towers, which consist of individual tower segments. An intermediate platform is fixed at the top of the foundation towers. The mast of the tower is arranged on the intermediate platform. The mast of the tower is stabilized by brackets.

The document DE 20 2004 006 633 U1 shows a connector that connects the mast tower to the lattice mast. The connector has claws in the main struts of the lattice mast. The brackets are connected by cantilevers to the cylinder. The cylinder comprises the upper and lower end of a respective end plate, which is open in the center to ensure access to the inside of the mast tower.

All towers with buttress are designed with a type of joining piece that is highly complex to manufacture and assemble. In addition, the buttress of this type of tower produce very important local stresses in their connection to the main shaft, both in the main shaft and in the buttress themselves, which requires the joints of the buttress to be locally stiffened with the main shaft, involving extra cost and the technical complexity of implementing said reinforcement.

However, none of these documents discloses a system for joining the buttress and the main shaft of a wind turbine tower that confers the manufacturing ease provided by the system object of the invention or the ease in joining the buttress to the main shaft along with the viability thereof proposed, not only in terms of manufacturing, but also during the life cycle of the entire tower, including transportation, assembly, maintenance and final decommissioning of the same.

Similarly, in order to achieve the connection between the buttress and the main shaft, none of the documents offers easy access to the joining area between the buttress and the main shaft, which can only be carried out from inside the main shaft, thereby avoiding complex maintenance operations from the outside.

### Description of the invention

The present invention relates to a joining system between wind turbine tower main shaft and buttress elements, wherein the main shaft comprises a joining ring, and such that the joining system comprises at least one fastening structure located in the joining ring to receive and fasten at least one buttress.

The fastening structure of the joining ring comprises a closed curved structure and a central cross beam, such that the fastening structure is integrated in the joining ring and extends at least towards the inside thereof.

In addition, each buttress comprises an end, which in turn comprises a central web and a wing, such that the wing of the end of the buttress is fastened to the central cross beam of the fastening structure of the joining ring.

In the system for joining buttress to the main shaft of a wind generator object of the invention, the closed curved structure comprises an upper half and a lower half separated by the central cross beam, and the fastening structure comprises reinforcement plates that cover the halves of the closed curved structure and distribute the stresses generated when the buttress rests on the closed curved structure.

In the system for joining buttress to the main shaft of a wind generator object of the invention, the buttress comprise a wedge-shaped end, which makes it easier to bring the end of the buttress closer to the main shaft.

The system for joining buttress to the main shaft of a wind generator object of the invention comprises a plurality of screws that fasten the wing of the end of the buttress to the central cross beam of the fastening structure, such that the screws pass through the central cross beam and thread onto the wing of the end of the buttress. This configuration does not enable the screws to be accessed from outside and requires work on the fastening of the buttress to the main shaft be carried out from inside the main shaft, offering security since such works have to be performed from inside the main shaft.

In the system for joining buttress to the main shaft of a wind generator object of the invention, the buttress comprise an elbow configured to change the orientation of the buttress from a position parallel to the main shaft to a position in which an end section of the buttress is joined at one end to the joining ring.

The system for joining buttress to the main shaft of a wind generator object of the invention comprises at least one joining flange located on the main shaft, configured to join the buttress to the main shaft by means of at least one strut per buttress.

Thus the buttress are joined to the main shaft by means of the struts that join the elbows with the at least one joining flange.

Each elbow comprises a stiffening disk on the inside thereof and an outer plate located corresponding to the stiffening disk, such that the outer plate receives the struts.

In the system for joining buttress to the main shaft of a wind generator, the struts comprise a main beam and two reinforcement beams.

The main beam of the struts comprises a first flat end configured to be fastened to the elbow and a second end comprising a circumference sector which is joined to the at least one joining flange.

The system for joining buttress to the main shaft of a wind generator comprises two fastening plates that cover both the outer plate of the elbow and the flat end of the main beam.

The elbows comprise an upper ring for joining the end section of the buttress.

Another object of the invention is a wind generator tower comprising the main shaft and a plurality of buttress that comprise the system for joining buttress to the main shaft defined previously.

### Description of the drawings

To complete the description, and for the purpose of helping to make the characteristics of the invention more readily understandable, the present specification is accompanied by a set of figures constituting an integral part of the same, which by way of illustration and not limitation represent the following:

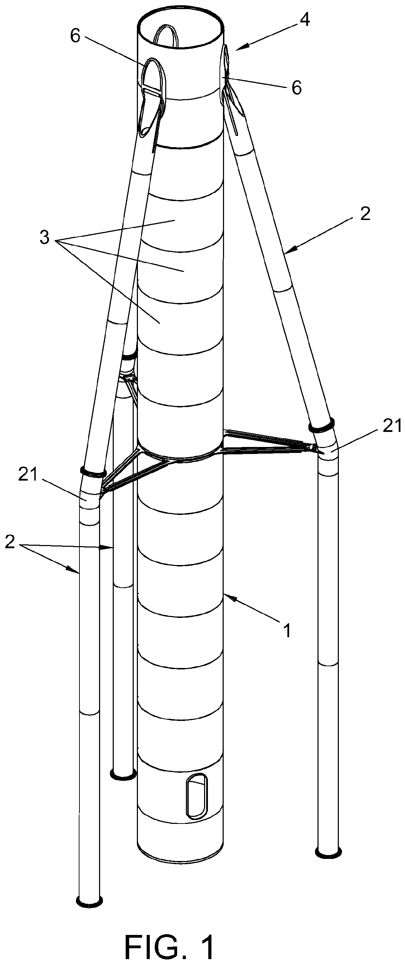

Figure 1 shows a perspective view of a wind turbine tower with the system for joining the buttress to the main shaft object of the invention.

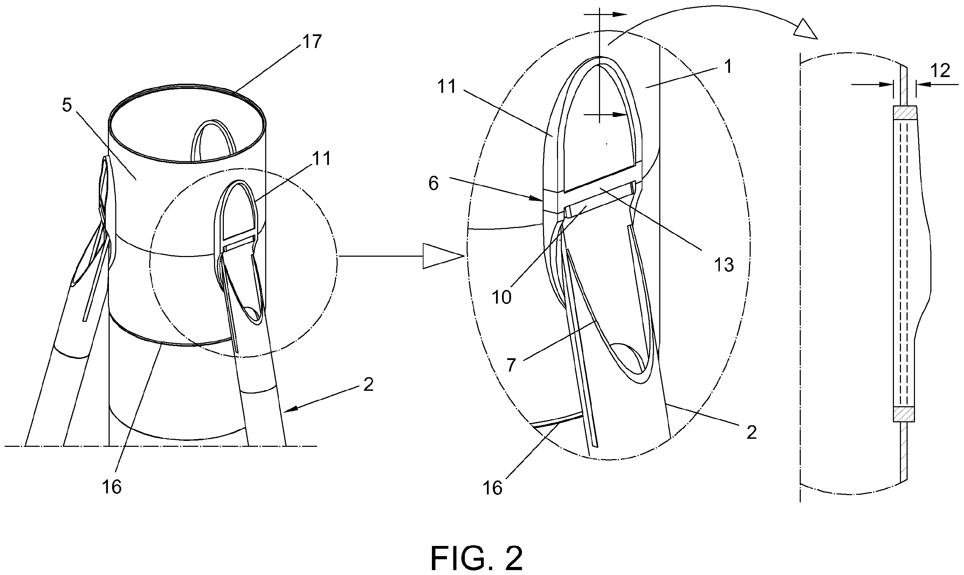

Figure 2 shows a perspective view of a section of the wind turbine tower with the joining ring of the joining system object of the invention, a detailed view thereof showing the fastening structure.

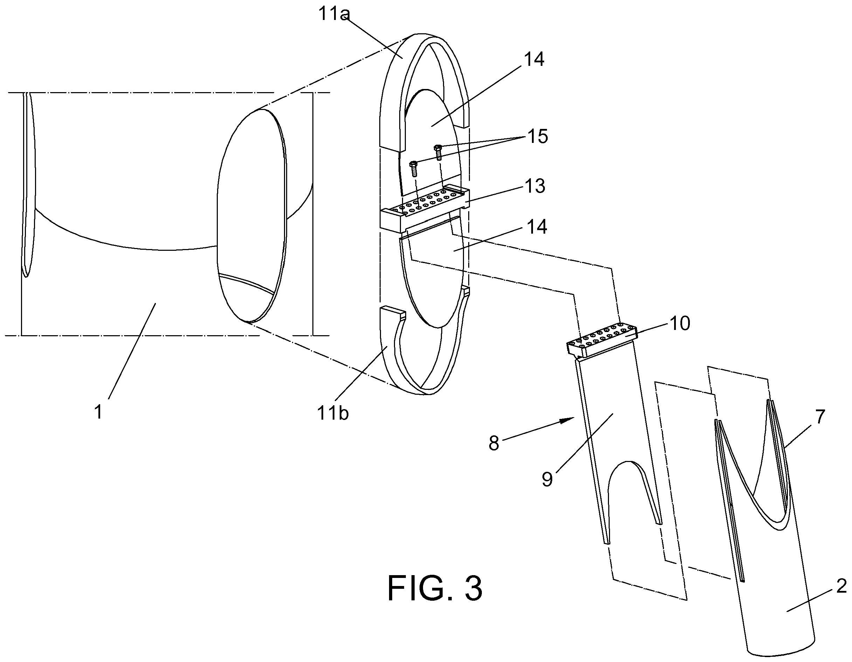

Figure 3 shows a detailed view of Figure 2 showing an exploded view of the components of the fastening structure and the end section of the buttress.

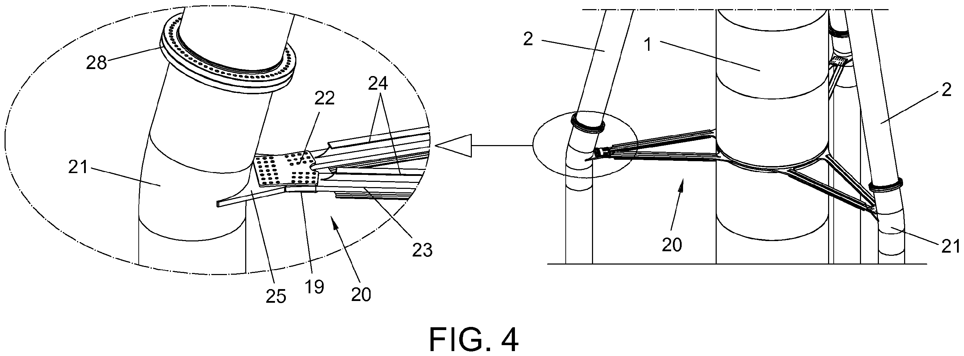

Figure 4 shows a perspective view of the wind generator tower showing the joins between the elbows and the joining flanges by means of struts and it shows a detailed view of the fastening of each elbow to the two struts.

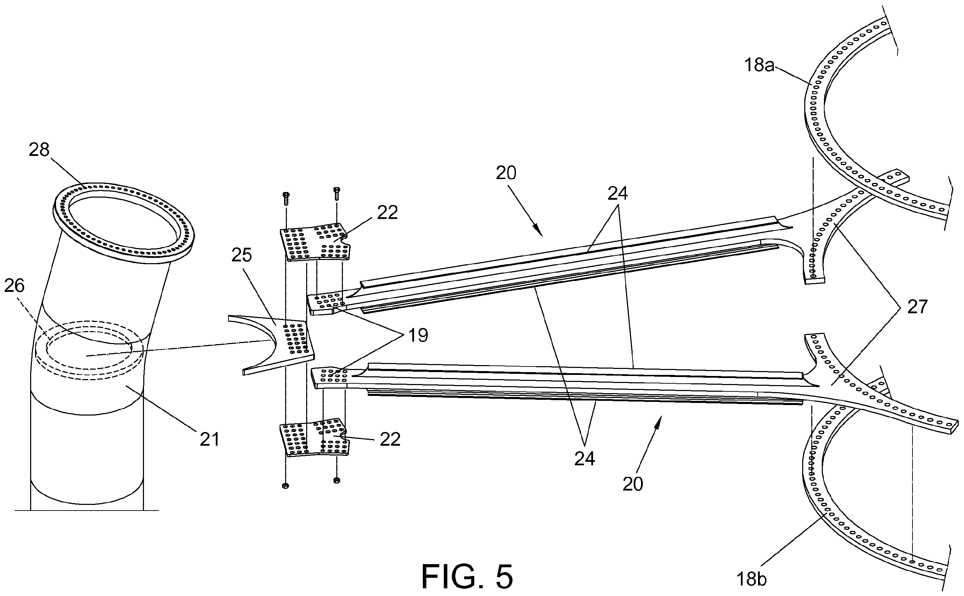

Figure 5 shows an exploded view of the join between elbows and joining flanges and the elements of the struts.

Below is a list of the different elements shown in the figures that are included in the invention:
1.- main shaft,
2.- buttress,
3.- rings,
4.- joining ring,
5.- cylindrical piece,
6.- fastening structure,
7.- wedge shape,
8.- head,
9.- central web,
10.- wing,
11.- closed curved structure,
11a.- upper portion of the closed curved structure,
11b.- lower portion of the closed curved structure,
12.- thickness,
13.- central cross beam,
14.- reinforcement plates,
15.- screws,
16.- upper perimeter recess,
17.- lower perimeter recess,
18a, 18b. - joining flange,
19.- flat end,
20.- strut,
21.- elbow,
22.- fastening plate,
23.- main beam,
24.- reinforcement beam,
25.- outer plate,
26.- stiffening disk,
27.- circumference sector, and
28.- upper ring.

### Detailed description of an embodiment of the invention

First of all, it should be noted that when wind generator towers are significantly high, they are made up of a main shaft (1) and several buttress (2), which are joined to the main shaft (1), through a joining ring (4) located at a certain position along said main shaft (1) at one end thereof.

The main shaft (1) is made up of rings (3) that are located on one another to form said main shaft (1).

The present invention relates to a joining system between wind turbine tower main shaft (1) and buttress (2) elements. The system object of the invention comprises a specially designed joining ring (4) located between the rings (3) that make up the main shaft (1), such that the joining ring (4) is the one that receives the ends of the buttress (2).

The joining ring (4) comprises a cylindrical piece (5) located between two rings (3) of a main shaft (1) and which, in turn, comprises a fastening structure (6) for each buttress (2), thus, in the preferred embodiment of the invention, the joining ring (4) comprises three fastening structures (6). The fastening structures (6) are integrated in the cylindrical piece (5), considering that they are integrated to mean forming part of the cylindrical piece (5) of the joining ring (4), for example, in one embodiment, the fastening structures (6) are welded to said cylindrical piece (5).

In a preferred embodiment of the joining system object of the invention, the end of the buttress (2) has a specific configuration, since the buttress (2) have a wedge-shaped (7) end comprising a T-shaped head (8), also called hammer head.

In the preferred embodiment of the head (8) of the buttress (2), said head (8) comprises a central web (9) and a wing (10), such that the central web (9) emerges from the wedge-shaped (7) end, and the wing (10) is located perpendicular to the central web (9), which, as will be seen further on in this description, is the element that rests on the joining ring (4) of the main shaft (1).

With respect to the fastening structures (6) of the joining ring (4), each fastening structure (6) comprises a closed curved structure (11) having a specific thickness (12) (considering the thickness (12) in the radial direction of the joining ring), and a central cross beam (13) that passes through the closed curved structure (11), having the same thickness (12) as the closed curved structure (11) and dividing the closed curved structure (11) into an upper half (11a) and a lower half (11b). In the preferred embodiment of the invention, the closed curved structure (11) has an elliptical shape.

The closed curved structures (11) are integrated in the cylindrical piece (5) of the joining ring (4), but project mainly towards the inside of the cylindrical piece (5) of the joining ring (4).

The buttress (2) rest on the joining ring (4), specifically on the central cross beams (13) of the fastening structures (6) of the joining ring (4), and the resting is carried out through the wing (10) of the "T" shaped head (8) of the wedge-shaped (7) end of the buttress (2). Therefore, the wing (10) of the head (8) rests on the central cross beam (13) of the fastening structure (6) integrated in the joining ring (4) and is joined to said central cross beam (13) by means of a plurality of screws (15) that, in the preferred embodiment of the invention, pass through the central cross beam (13) and thread onto the wing (10) of the head (8) of the buttress (2). The central cross beam (13) is oriented such that the resting of the wing (10) on the central cross beam (13) itself is carried out on a flat surface, resulting in a stable support of the wing (10) on the central cross beam (13).

In addition, each fastening structure (6) comprises reinforcement plates (14) that cover the halves (11a, 11b) of the closed curved structure (11), such that they bind the closed curved structure (11) at the perimeter and stiffen said closed curved structure (11) on the inside.

The reinforcement plates (14) that cover the halves (11a, 11b) of each closed curved structure (11), are inclined with respect to the vertical, specifically, the reinforcement plates (14) cover the central cross beam (13) when looking at the main shaft (1) from outside the tower, such that the central cross beam (13) can only be worked on from inside the tower. The inclination of the reinforcement plates (14) is such that, in the upper half (11a) of the closed curved structure (11), it contributes to distributing the stresses generated by the wing (10) of the head (8) of the buttress (2) resting on the central cross beam (13), similarly, the lower half (11b) of the closed curved structure (11), in addition to stiffening the closed curved structure (11), prevents access to the central cross beam (13) from outside the tower.

The joint of the joining ring (4) with the rings (3) that make up the main shaft (1) is a welded join, so that the joining ring (4) comprises an upper perimeter recess (17) at one end to house a weld bead and a lower perimeter recess (16) at the opposite end to house a weld bead, such that the joining ring (4) is fastened to the rings (3) by means of welding.

The buttress (2) of the tower have a first section running parallel to the main shaft (1) and an end section in which they change orientation and move closer to one another until they come into contact with the main shaft (1) in the joining ring (4). In order to change the orientation of the buttress (2), said buttress (2) incorporate an elbow (21) configured to change the orientation of the buttress (2) from a position parallel to the main shaft (1) to a position in which an end section of the buttress (2) is joined at one end to the joining ring (4).

In addition to being joined through the joining ring (4), the buttress (2) are joined to the main shaft (1) by means of struts (20), which, in the preferred embodiment, are two struts (20) for each buttress (2).

The joining system object of the invention comprises two joining flanges (18a, 18b) located on the main shaft (1) in order to receive the struts (20), such that the struts (20) are fastened at one end between the two joining flanges (18a, 18b).

The struts (20) that join the elbows (21) to the joining flanges (18a, 18b) comprise a main beam (23) and two reinforcement beams (24) located on both sides of the main beam (23). The main beam (23) comprises a flat end (19) configured to come into contact with the elbow (21) and an opposite end comprising a circumference sector (27), which is introduced between the two joining flanges (18a, 18b).

In the preferred embodiment of the invention, wherein three buttress (2) are joined to the main shaft (1) and each buttress (2) is joined by means of two struts (20), the circumference sector (27) of the end of the main beam (23) is shaped like a sixth portion of an entire circumference, such that the six struts (20) between the two joining flanges (18a, 18b) form an entire circumference.

In order to facilitate the fastening of the struts (20) to the elbow (21), each elbow (21) comprises a plate (25) wherein the flat ends (19) of the main beams (23) of two struts (20) are fastened by means of two fastening plates (22) that cover both the plate (25) of the elbow (21) and the flat end (19) of the main beam (23). Each elbow (21) comprises a stiffening disk (26) located inside the elbow (21) corresponding to the plate (25) of the elbow (21), which contributes to receiving the stresses that the struts (20) transmit to the elbow (21) and vice versa.

By means of the joining system object of the invention, stress distribution is generated with the joining ring (4), the joining flanges (18a, 18b), the main shaft (1) and the buttress (2), wherein the momentum generated at the end of the tower is transformed into axial stress that is distributed by the buttress. This distribution of stresses by means of a lattice addresses the problem of the possible local buckling in the diagonals, which is prevented with the joining system object of the invention, due to the connections between the buttress (2) and the main shaft (1).

Lastly, in order to join the upper section of the buttress (2) to the elbows (21), said elbows (21) comprise an upper ring (28) where the upper portion of the buttress (2) rests.

Another object of the invention is a wind generator tower comprising a main shaft (1) and a plurality of buttress (2) such that the tower comprises the system for joining buttress (2) to the main shaft (1) defined throughout this description.

The invention is not intended to be limited to the specific embodiment described in this document. Those skilled in the art may develop other embodiments in light of the description made herein. As such, the scope of the invention is defined by the following claims.

## Claims

1. A system for joining buttress (2) to the main tower shaft (1) of a wind generator, wherein the main shaft (1) comprises a joining ring (4) and the joining system comprises:
- at least one fastening structure (6) located on the joining ring (4), to receive and fasten at least one buttress (2); **characterized in that** the fastening structure (6) comprises:
- a closed curved structure (11); and,
- a central cross beam (13);
- further **characterized in that**:
each buttress (2) comprises an end, which in turn comprises a central web (9) and a wing (10);
wherein the fastening structure (6) is integrated in the joining ring (4), and wherein the wing (10) of the end of the buttress (2) is fastened to the central cross beam (13) of the fastening structure (6) of the joining ring (4).

2. The system for joining buttress (2) to the main shaft (1) of a wind generator, according to claim 1 **characterized in that**:
- the closed curved structure (11) comprises an upper half (11a) and a lower half (11b) separated by the central cross beam (13); and,
- the fastening structure (6) comprises reinforcement plates (14) that cover the halves (11a, 11b) of the closed curved structure (11).

3. The system for joining buttress (2) to the main shaft (1) of a wind generator, according to any of the preceding claims, **characterized in that** the buttress (2) comprise a wedge-shaped (7) end.

4. The system for joining buttress (2) to the main shaft (1) of a wind generator, according to any of the preceding claims, **characterized in that** it comprises a plurality of screws (15) that fasten the wing (10) of the end of the buttress (2) to the central cross beam (13) of the fastening structure (6).

5. The system for joining buttress (2) to the main shaft (1) of a wind generator, according to claim 4, **characterized in that** the screws (15) pass through the central cross beam (13) and thread onto the wing (10) of the end of the buttress (2).

6. The system for joining buttress (2) to the main shaft (1) of a wind generator, according to claims 1 to 5, **characterized in that**:
- the buttress (2) comprise an elbow (21) configured to change the orientation of the buttress (2) from a position parallel to the main shaft (1) to a position in which an end section of the buttress (2) is joined at one end to the joining ring (4);
- it comprises at least one joining flange (18a, 18b) located on the main shaft (1), configured to join the buttress (2) to the main shaft (1) by means of at least one strut (20) per buttress (2);
wherein the buttress (2) are joined to the main shaft (1) by means of the struts (20) that join the elbows (21) to the at least one joining flange (18a, 18b).

7. The system for joining buttress (2) to the main shaft (1) of a wind generator, according to claim 6, **characterized in that** the elbow (21) comprises a stiffening disk (26) in the inside thereof and an outer plate (25) located corresponding to the stiffening disk (26), such that the outer plate (25) receives the struts (20).

8. The system for joining buttress (2) to the main shaft (1) of a wind generator, according to claim 7, **characterized in that** the struts (20) comprise a main beam (23) and two reinforcement beams (24).

9. The system for joining buttress (2) to the main shaft (1) of a wind generator, according to claim 8, **characterized in that** the main beam (23) comprises:
- a first flat end (19) configured to be fastened to the elbow (21); and,
- a second end comprising a circumference section (27), which is joined to at least one joining flange (18a, 18b).

10. The system for joining buttress (2) to the main shaft (1) of a wind generator, according to claims 7 to 9, **characterized in that** it comprises two fastening plates (22) that cover both the plate (25) of the elbow (21) and the flat end (19) of the main beam (23).

11. The system for joining buttress (2) to the main shaft (1) of a wind generator, according to claims 6 to 10, **characterized in that** the elbows (21) comprise an upper ring (28) for joining the end section of the buttress (2).

12. Wind turbine tower comprising the main shaft (1) and a plurality of buttress (2) **characterized in that** it comprises the joining system between wind turbine tower main shaft (1) and buttress (2) elements defined in any one of the previous claims.

## Patentansprüche

1. System zum Verbinden von Stützen (2) mit dem Haupt-Turmschaft (1) eines Windgenerators,
wobei der Haupt-Schaft (1) einen Verbindungsring (4) umfasst und das Verbindungssystem umfasst:
wenigstens eine Befestigungsstruktur (6), die an dem Verbindungsring (4) angeordnet ist, um wenigstens eine Stütze (2) aufzunehmen und zu befestigen;
**dadurch gekennzeichnet, dass**
die Befestigungsstruktur (6) umfasst:
eine geschlossene gekrümmte Struktur (11); sowie
einen mittigen Querträger (13);
des Weiteren **dadurch gekennzeichnet, dass:**
jede Stütze (2) ein Ende umfasst, das seinerseits einen mittigen Steg (9) und einen Flügel (10) umfasst;
wobei die Befestigungsstruktur (6) in den Verbindungsring (4) integriert ist und der Flügel (10) des Endes der Stütze (2) an dem mittigen Querträger (13) der Befestigungsstruktur (6) des Verbindungsrings (4) befestigt ist.

2. System zum Verbinden von Stützen (2) mit dem Haupt-Schaft (1) eines Windgenerators nach Anspruch 1, **dadurch gekennzeichnet, dass:**
die geschlossene gekrümmte Struktur (11) eine obere Hälfte (11a) sowie eine untere Hälfte (11b) umfasst, die durch den mittigen Querträger (13) getrennt sind; und
die Befestigungsstruktur (6) Verstärkungsplatten (14) umfasst, die die Hälften (11a, 11b) der geschlossenen gekrümmten Struktur (11) abdecken.

3. System zum Verbinden von Stützen (2) mit dem Haupt-Schaft (1) eines Windgenerators nach einem der vorangehenden Ansprüche, **dadurch gekennzeichnet, dass** die Stütze (2) ein keilförmiges Ende (7) aufweist.

4. System zum Verbinden von Stützen (2) mit dem Haupt-Schaft (1) eines Windgenerators nach einem der vorangehenden Ansprüche, **dadurch gekennzeichnet, dass** es eine Vielzahl von Schrauben (15) umfasst, die den Flügel (10) des Endes der Stütze (2) an dem mittigen Querträger (13) der Befestigungsstruktur (6) befestigen.

5. System zum Verbinden von Stützen (2) mit dem Haupt-Schaft (1) eines Windgenerators nach Anspruch 4, **dadurch gekennzeichnet, dass** die Schrauben (15) durch den mittigen Querträger (13) hindurchtreten und auf den Flügel (10) des Endes der Stütze (2) aufgeschraubt sind.

6. System zum Verbinden von Stützen (2) mit dem Haupt-Schaft (1) eines Windgenerators nach den Ansprüchen 1 bis 5, **dadurch gekennzeichnet, dass:**
die Stütze (2) ein Winkelstück (21) umfasst, das so eingerichtet ist, dass es die Ausrichtung der Stütze (2) von einer Position parallel zu dem Haupt-Schaft (1) zu einer Position ändert, an der ein Endabschnitt der Stütze (2) an einem Ende mit dem Verbindungsring (4) verbunden ist;
es wenigstens einen Verbindungsflansch (18a, 18b) umfasst, der an dem Haupt-Schaft (1) angeordnet ist, und so eingerichtet ist, dass es die Stütze (2) mittels wenigstens einer Strebe (20) pro Stütze (2) mit dem Haupt-Schaft (1) verbindet;
wobei die Stützen (2) mittels der Streben (20) mit dem Haupt-Schaft (1) verbunden sind, die die Winkelstücke (21) mit dem wenigstens einen Verbindungsflansch (18a, 18b) verbinden.

7. System zum Verbinden von Stützen (2) mit dem Haupt-Schaft (1) eines Windgenerators nach Anspruch 6, **dadurch gekennzeichnet, dass** das Winkelstück (21) eine Versteifungs-Scheibe (26) in seinem Inneren und eine Außenplatte (25) umfasst, die entsprechend der Versteifungs-Scheibe (26) so angeordnet ist, dass die Außenplatte (25) die Streben (20) aufnimmt.

8. System zum Verbinden von Stützen (2) mit dem Haupt-Schaft (1) eines Windgenerators nach Anspruch 7, **dadurch gekennzeichnet, dass** die Stützen (20) einen Haupt-Träger (23) sowie zwei Verstärkungs-Träger (24) umfassen.

9. System zum Verbinden von Stützen (2) mit dem Haupt-Schaft (1) eines Windgenerators nach Anspruch 8, **dadurch gekennzeichnet, dass** der Haupt-Träger (23) umfasst:
ein erstes flaches Ende (19), das zum Befestigen an dem Winkelstück (21) eingerichtet ist; sowie
ein zweites Ende, das einen Umfangsabschnitt (27) umfasst, der mit wenigstens einem Verbindungsflansch (18a, 18b) verbunden ist.

10. System zum Verbinden von Stützen (2) mit dem Haupt-Schaft (1) eines Windgenerators nach den Ansprüchen 7 bis 9, **dadurch gekennzeichnet, dass** es zwei Befestigungsplatten (22) umfasst, die sowohl die Platte (25) des Winkelstücks (21) als auch das flache Ende (19) des Haupt-Trägers (23) abdecken.

11. System zum Verbinden von Stützen (2) mit dem Haupt-Schaft (1) eines Windgenerators nach den Ansprüchen 6 bis 10, **dadurch gekennzeichnet, dass** die Winkelstücke (21) einen oberen Ring (28) zum Verbinden des Endabschnitts der Stütze (2) umfassen.

12. Windturbinen-Turm, der den Haupt-Schaft (1) sowie eine Vielzahl von Stützen (2) umfasst, **dadurch gekennzeichnet, dass** er das Verbindungssystem zwischen dem Haupt-Schaft (1) des Windturbinen-Turms und Stützen-Elementen (2) nach einem der vorangehenden Ansprüche umfasst.

## Revendications

1. Un système pour réaliser la jonction d'un contrefort (2) à l'arbre principal (1) de la tour d'une éolienne,
l'arbre principal (1) comprenant un anneau de jonction (4) et le système d'assemblage comprenant :
- au moins une structure de fixation (6) située sur l'anneau de jonction (4), pour recevoir et fixer au moins un contrefort (2) ; **caractérisé en ce que** la structure de fixation (6) comprend :
- une structure courbe fermée (11) ; et
- une traverse centrale (13) ;
**caractérisé en outre en ce que** :
chaque contrefort (2) comprend une extrémité, qui elle-même comprend une partie centrale (9) et une aile (10) ;
la structure de fixation (6) étant intégrée dans l'anneau de jonction (4), et l'aile (10) de l'extrémité du contrefort (2) étant fixée sur la traverse centrale (13) de la structure de fixation (6) de l'anneau de jonction (4).

2. Le système d'assemblage d'un contrefort (2) à l'arbre principal (1) d'une éolienne selon la revendication 1, **caractérisé en ce que** :
- la structure courbe fermée (11) comprend une moitié supérieure (11 a) et une moitié inférieure (11 b) séparées par la traverse centrale (13) ; et,
- la structure de fixation (6) comprend des plaques de renforcement (14) qui recouvrent les moitiés (11a, 11b) de la structure courbe fermée (11).

3. Le système d'assemblage d'un contrefort (2) à l'arbre principal (1) d'une éolienne selon l'une quelconque des revendications précédentes, **caractérisé en ce que** le contrefort (2) comporte une extrémité (7) en forme de coin.

4. Le système d'assemblage d'un contrefort (2) à l'arbre principal (1) d'une éolienne selon l'une quelconque des revendications précédentes, **caractérisé en ce qu'**il comprend une pluralité de vis (15) qui fixent l'aile (10) de l'extrémité du contrefort (2) sur la traverse centrale (13) de la structure de fixation (6).

5. Le système d'assemblage d'un contrefort (2) à l'arbre principal (1) d'une éolienne selon la revendication 4, **caractérisé en ce que** les vis (15) passent au travers de la traverse centrale (13) et se vissent sur l'aile (10) de l'extrémité du contrefort (2).

6. Le système d'assemblage de contreforts (2) à l'arbre principal (1) d'une éolienne selon les revendications 1 à 5, **caractérisé en ce que** :
- le contrefort (2) comprend un coude (21) configuré pour changer l'orientation du contrefort (2) entre une position parallèle à l'arbre principal (1) et une position dans laquelle une portion d'extrémité du contrefort (2) est reliée à une extrémité à l'anneau d'assemblage (4) ;
- il comprend au moins une bride de liaison (18a, 18b) située sur l'arbre principal (1), configurée pour relier le contrefort (2) à l'arbre principal (1) au moyen d'au moins une entretoise (20) par contrefort (2) ;
les contreforts (2) étant reliés à l'arbre principal (1) au moyen des entretoises (20) qui relient les coudes (21) à ladite au moins une bride de liaison (18a, 18b).

7. Le système d'assemblage d'un contrefort (2) à l'arbre principal (1) d'une éolienne selon la revendication 6, **caractérisé en ce que** le coude (21) comprend un disque raidisseur (26) à l'intérieur de lui et une plaque extérieure (25) située en correspondance du disque raidisseur (26), de sorte que la plaque extérieure (25) reçoit les montants (20).

8. Le système d'assemblage d'un contrefort (2) à l'arbre principal (1) d'une éolienne selon la revendication 7, **caractérisé en ce que** les entretoises (20) comprennent une poutre principale (23) et deux poutres de renforcement (24).

9. Le système d'assemblage d'un contrefort (2) à l'arbre principal (1) d'une éolienne selon la revendication 8, **caractérisé en ce que** la poutre principale (23) comprend :
- une première extrémité plate (19) configurée pour être fixée au coude (21) ; et,
- une deuxième extrémité comprenant une portion circonférentielle (27) qui est reliée à au moins une bride de liaison (18a, 18b).

10. Le système d'assemblage d'un contrefort (2) à l'arbre principal (1) d'une éolienne selon les revendications 7 à 9, **caractérisé en ce qu'**il comprend deux plaques de fixation (22) qui recouvrent à la fois la plaque (25) du coude (21) et l'extrémité plate (19) de la poutre principale (23).

11. Le système d'assemblage d'un contrefort (2) à l'arbre principal (1) d'une éolienne selon les revendications 6 à 10, **caractérisé en ce que** les coudes (21) comprennent un anneau supérieur (28) pour relier la portion d'extrémité du contrefort (2).

12. Tour d'éolienne comprenant l'arbre principal (1) et une pluralité de contreforts (2), **caractérisée en ce qu'**elle comprend le système d'assemblage entre l'arbre principal (1) de la tour d'éolienne et des éléments de contrefort (2) définis dans l'une des revendications précédentes.
